Europäisches Patentamt

European Patent Office

Office européen des brevets

(11) Veröffentlichungsnummer : **0 202 263**
**B1**

(12) **EUROPÄISCHE PATENTSCHRIFT**

(45) Veröffentlichungstag der Patentschrift :
05.04.89

(21) Anmeldenummer : 85905503.0

(22) Anmeldetag : 25.10.85

(86) Internationale Anmeldenummer :
PCT/DE 85/00415

(87) Internationale Veröffentlichungsnummer :
WO/8602869 (22.05.86 Gazette 86/11)

(51) Int. Cl.⁴ : **B 23 Q  7/14**, B 23 Q 11/16,
F 16 H 25/18

(54) VORRICHTUNG ZUM ABHEBEN VON WERKSTÜCKEN UND WERKSTÜCKTRÄGERN VON EINER FÖRDERBAHN.

(30) Priorität : 16.11.84 DE 3441965

(43) Veröffentlichungstag der Anmeldung :
26.11.86 Patentblatt 86/48

(45) Bekanntmachung des Hinweises auf die Patenterteilung : 05.04.89 Patentblatt 89/14

(84) Benannte Vertragsstaaten :
CH DE FR GB IT LI

(56) Entgegenhaltungen :
DE–C–  763 919
GB–A–  547 496
GB–A– 2 038 671
US–A– 1 347 778
US–A– 1 499 560
Patents Abstracts of Japan, Band 5, Nr.39 (M-59)
(711)14. März 1981 980

(73) Patentinhaber : ROBERT BOSCH GMBH
Postfach 50
D-7000 Stuttgart 1 (DE)

(72) Erfinder : MAIER, Gernot
Im Geiger 81
D-7000 Stuttgart 50 (DE)
Erfinder : BONK, Klaus
Burgenlandstrasse 118
D-7000 Stuttgart 30 (DE)

## Beschreibung

### Stand der Technik

Die Erfindung geht aus von einer Vorrichtung nach der Gattung des Hauptanspruchs. Bei einer bekannten Vorrichtung dieser Gattung sind Hubflächen am Schieber und Gegenflächen am Hubtisch als in sich ebene Keilflächen ausgebildet, über velche sich der Hubtisch am Schieber und über diesen am Sockel abstützt. Diese Anordnung hat den Nachteil, daß zur Erreichung eines bestimmten Hubes entweder der Schieber einen relativ großen Weg zurücklegen muß, oder daß zusätzliche Mittel zum Festhalten des Schiebers in seinen beiden Endstellungen vorgesehen sein müssen. Außerdem sind wegen der gleitenden Reibung die Kräfte zum Bewegen des Schiebers verhältnismäßig groß. Ferner werden die Hubflächen und die Gegenflächen an den Teilen stark beansprucht, weil über sie auch der Arbeitsdruck übertragen wird.

Aus der GB-A 547 496 ist es bei Werkzeugmaschinen bekannt, den Werktisch vertikal verschiebbar zu lagern und darunter einen horizontal bewegbaren Schieber anzuordnen, der bei seiner Bewegung von einer ersten in eine zweite Endstellung den Arbeitstisch über Keilflächen und am Arbeitstisch drehbar gelagerte Hubrollen in eine Arbeitsstellung anhebt. Dabei ist die Anordnung so getroffen, daß der Arbeitsdruck über die Hubrollen auf die Keilflächen des Schiebers und von diesem über ebene Auflageflächen auf einen darunter liegenden Sockel übertragen wird, wobei jedoch die Hubrollen und deren Lagerungen hoch beansprucht werden.

Aus der DE-C 763 919 sind ferner Einrichtungen zum Heben von Werktischen an Fräsmaschinen mit Hilfe eines Schiebers bekannt, der mit einer Vielzahl von Keilflächen versehen ist und über eine Vielzahl von in einem besonderen Käfig gefaßten Hubrollen auf den Werktisch einwirkt. An die Keilflächen schließen sich ebene Stützflächen für die Hubrollen an, auf denen die Hubrollen in der Arbeitsstellung des Werktisches aufliegen. Bei dieser Ausführung sind zwar die Keilflächen am Schieber vom Arbeitsdruck entlastet, nicht aber die Hubrollen, die nach wie vor einer hohen mechanischen Beanspruchung ausgesetzt sind.

Der Erfindung liegt die Aufgabe zugrunde, bei Vorrichtungen der gattungsmäßigen Art den Verschleiß der Hubflächen an den gegeneinander bewegten Teilen und die zum Bewegen des Schiebers benötigte Antriebskraft zu verringern.

Die erfindungsgemäße Anordnung mit den kennzeichnenden Merkmalen des Hauptanspruchs hat den Vorteil, daß bei der Stellbewegung des Schiebers im wesentlichen nur rollende Reibung auftritt, so daß auch eine geringere Antriebsleistung für den Schieber benötigt wird. Die Hubrollen und die Hubflächen sind in Arbeitsstellung des Hubtisches vom Stütz- bzw. Arbeitsdruck entlastet und die beiden Endstellungen des Schiebers brauchen nicht exakt definiert zu sein, so daß besondere Mittel hierfür entfallen.

Durch die in den Unteransprüchen angegebenen Maßnahmen sind vorteilhafte Weiterbildungen der Anordnung nach dem Hauptanspruch möglich.

Zur Bildung der Hubflächen wird gemäß Anspruch 2 die Verwendung von Zylinderkörpern vorgeschlagen, die vorzugsweise fest mit dem sie tragenden Teil verbunden sind. Den Zylinderkörpern kann gemäß Anspruch 3 vorteilhaft an der der Gegenfläche zugekehrten Seite ein Vorhubkörper kleineren Durchmessers vorgelagert sein. Die Zylinderkörper können aus billigen und sehr maßgenauen Teilen ohne zusätzliche Bearbeitung an den Hubflächen hergestellt und auf einfache Weise an dem sie tragenden Teil befestigt werden, wobei auf eine bestimmte Winkelstellung nicht geachtet werden muß. Der Vorhubkörper erleichtert den Hubbeginn und kann auch zur Erzeugung eines definierten Vorhubs genutzt werden, wenn ein solcher in dem einen oder anderen Fall erwünscht ist.

Besonders vorteilhaft ist es, wenn sowohl zwischen dem Schieber und dem Hubtisch als auch zwischen dem Schieber und dem Sockel Hubflächen angeordnet sind. In diesem Fall führt auch der Schieber eine Hubbewegung aus, die sich zur relativen Hubbewegung des Hubtisches gegenüber dem Schieber addiert. Dadurch kann die Steigung der Hubflächen oder der Stellweg des Schiebers entsprechend verringert werden.

### Zeichnung

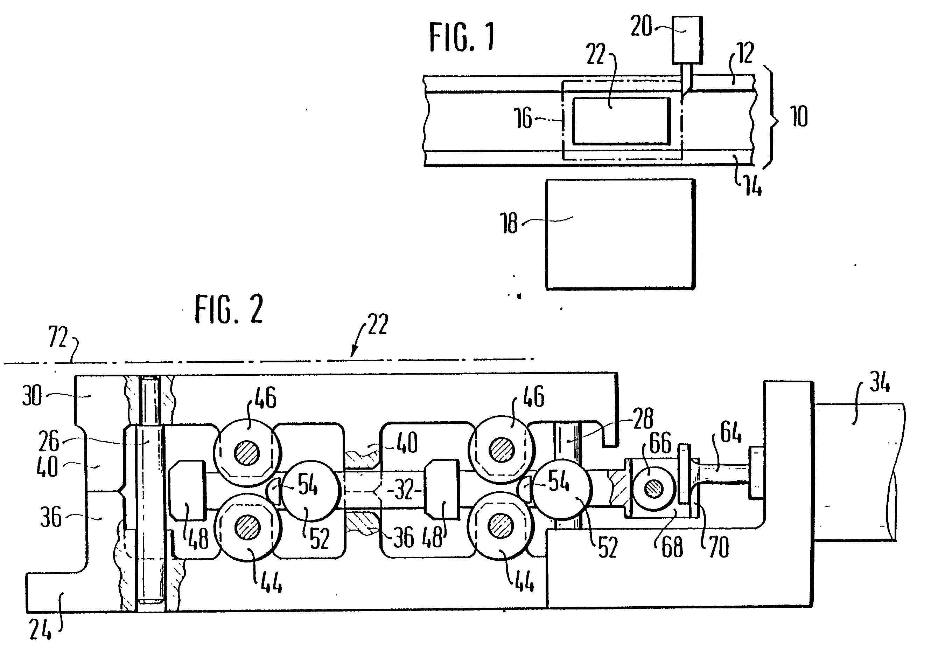

Ein Ausführungsbeispiel der Erfindung ist in der Zeichnung schematisch dargestellt und in der nachfolgenden Beschreibung näher erläutert. Es zeigen Figur 1 eine Draufsicht auf einen Arbeitsplatz an einem Förderband und die Figuren 2 bis 4 die erfindungsgemäße Vorrichtung in Seitenansicht und teilweise im Schnitt in drei- verschiedenen Stellungen.

### Beschreibung des Ausführungsbeispieles

Eine Förderbahn 10 hat zwei Fördergurte 12 und 14, auf denen wie angedeutet Werkstückträger 16 aufliegen und durch Reibungsschluß mitgenommen werden. Zum Anhalten der Werkstückträger 16 an einem Arbeitsplatz 18 ist ein Anschlag 20 vorgesehen, welcher in die Bewegungsbahn der Werkstückträger 16 einführbar ist. Ferner ist am Arbeitsplatz 18 eine erfindungsgemäß ausgebildete Hubeinrichtung 22 zwischen den Fördergurten 12, 14 angeordnet, welche zum Abheben der am Anschlag 20 festgehaltenen Werkstückträger 16 von den Fördergurten 12, 14 und zum Abstützen gegen den am Arbeitsplatz 18 auf die Werkstücke ausgeübten Arbeitsdruck dient.

Die Hubvorrichtung 22 hat einen Sockel 24, einen am Sockel 24 durch Bolzen 26, 28 senkrecht verschiebbar geführten Hubtisch 30 und einen zwischen diesen Teilen angeordneten Schieber 32, der mit einem druckluftbetätigten Stellantrieb 34 verbunden ist. Am Sockel 24 sind zwei senkrecht zur Zeichnungsebene ausgerichtete Stützleisten 36 gebildet, die oben mit Stützflächen 38 versehen sind. Senkrecht über den Stützleisten 36 ist der Hubtisch 30 mit zwei Stützleisten 40 und Stützflächen 42 versehen. Ferner sind am Sockel 24 Hubrollen 44 und am Hubtisch 30 Hubrollen 46 drehbar gelagert, die senkrecht über den Hubrollen 44 des Sockels 24 liegen. Die Hubrollen 44, 46 sind so bemessen und gegenüber den Stützflächen 38, 42 angeordnet, daß sich bei der in Figur 2 dargestellten, voll abgesenkten Stellung des Hubtisches 30, in der die Stützflächen 38, 42 aufeinanderliegen, die Hubrollen 44, 46 gerade nicht mehr berühren.

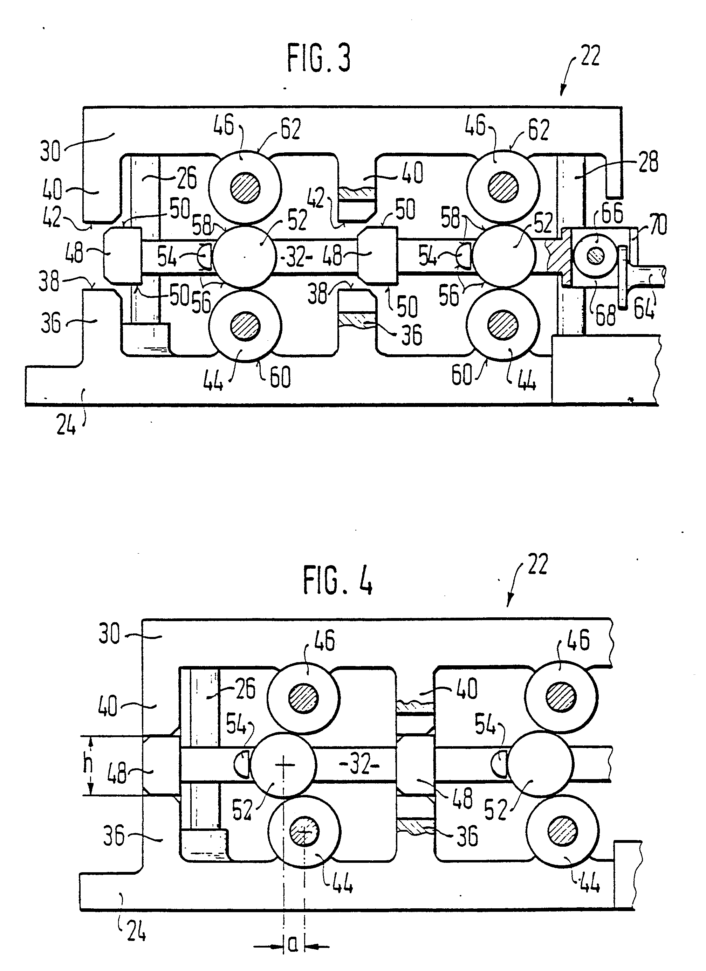

Der Schieber 32 hat zwei senkrecht zur Zeichnungsebene ausgerichtete Stützleisten 48, an denen oben und unten Stützflächen 50 (Figur 3) gebildet sind. Die Stützleisten 48 sind im gleichen Abstand zueinander angeordnet vie die Stützleisten 36 und 40 am Sockel 24 und Hubtisch 30. Am Schieber 32 sind ferner in jeder Hubrollenebene zwei Zylinderkörper 52 befestigt, deren in Schieberichtung gemessener Abstand dem Abstand der Hubrollenpaare 44, 44 und 46, 46 entspricht. Demgegenüber weicht die Zuordnung der Zylinderkörper 52 zu den Stützleisten 48 des Schiebers 32 von der Zuordnung der Hubrollen zu den Stützleisten am Sockel 24 und Hubtisch 30 um das Maß a (Figur 4) ab, auf welches bei der Funktionsbeschreibung der Vorrichtung noch eingegangen wird.

Vor jedem Zylinderkörper 52 ist ein Vorhubkörper 54 am Schieber 32 befestigt, der durch einen im Durchmesser wesentlich kleineren Bolzen mit einer angefasten Fläche gebildet ist, welche am Umfang des benachbarten Zylinderkörpers 52 anliegt. Jedes aus einem Zylinderkörper 52 und einem Vorhubkörper 54 gebildete Teilepaar stellt ein Hubelement dar, welches eine dem Sockel 24 zugekehrte Hubfläche 56 (Figur 3) und eine dem Hubtisch 30 zugekehrte Hubfläche 58 hat. Die mit den Hubflächen 56, 58 zusammenarbeitenden Gegenflächen sind die Mantelflächen 60 und 62 an den Hubrollen 44 und 46.

Der Stellantrieb 34 wirkt über eine Kolbenstange 64 auf eine Rolle 66 ein, die in einem Gabelkopf 68 des Schiebers 32 drehbar gelagert ist. An den freien Enden der Gabelkopfarme sind nach innen gerichtete Leisten 70 vorgesehen, über welche die Kolbenstange 64 beim Rückhub des Antriebs den Schieber 32 in die in Figur 2 gezeigte Ausgangsstellung zurückführt. Die beschriebene Vorrichtung arbeitet wie folgt :

In der in Figur 2 dargestellten Ausgangsstellung der Vorrichtung liegt der Hubtisch 30 mit seinen Stützflächen 42 auf den Stützflächen 38 des Sockels 24 auf. In dieser Stellung befindet sich die Arbeitsfläche des Hubtisches 30 ein Stück weit unterhalb der Fördergurtebene, die in Figur 2 durch die strichpunktierte Linie 72 angedeutet ist. Die Hubrollen sind in dieser Stellung vom Gewicht des Hubtisches 30 entlastet und der Schieber 32 ist in eine Stellung abgesenkt, in welcher die Vorhubkörper 54 auf den Hubrollen 44 des Sockels 24 aufliegen. In dieser Stellung kann der Schieber 32 zusätzlich an in der Zeichnung nicht dargestellten Schultern am Sockel 24 aufliegen.

Zum Anheben des Hubtisches 30 in die in Figur 4 gezeigte Arbeitsstellung, in welcher ein über der Vorrichtung angehaltener Werkstückträger 16 von den Fördergurten 12, 14 angehoben ist, wird der Schieber 32 vom Stellantrieb 34 nach links verschoben. Dabei dringen die Vorhubkörper 54 des Schiebers 32 in die Keilspalte zwischen den Hubrollen 44 und 46 ein und drücken den Hubtisch 30 hoch, wobei sich auch der Schieber 32 jeweils um die Hälfte des zurückgelegten Hubes mit nach oben bewegt. Gleichzeitig nähern sich die Stützleisten 48 des Schiebers 32 an die Stützleisten 36 und 40 des Sockels 24 und Hubtisches 30 an. Die Teile sind so bemessen und so angefast, daß die Stützleisten 48 des Schiebers 32 ungehindert zwischen die Stützleisten an Sockel und Hubtisch gelangen können.

Im weiteren Verlauf der Schiebebewegung stoßen die an den Zylinderkörpern 52 gebildeten Hubflächenabschnitte 56, 58 an die Hubrollen 44, 46 an und heben den Hubtisch 30 weiter aus, bis dieser seine in Figur 3 dargestellte höchste Lage erreicht, die noch über seiner Arbeitsstellung liegt. In dieser Stellung ist der Schieber 32 noch um die Strecke a (Figur 4) von seiner linken Endstellung entfernt. Durch das Überheben des Hubtisches 30 sind zwischen den Stützflächen 38, 42 und 50 Spalte gebildet, so daß der Schieber 32 zunächst ohne gleitende Reibung zwischen den Teilen weiterbewegt werden kann.

Bei der Weiterbewegung des Schiebers 32 wälzen sich die Hubrollen 44, 46 auf den rückwärtigen Mantelflächenbereichen der Zylinderkörper 52 ab, wobei sich der Schieber 32 und der Hubtisch 30 nach unten absenken. Wenn der Schieber 32 aus der Stellung nach Figur 3 um den Weg a weiter nach links verschoben ist, hat er seine in Figur 4 gezeigte zweite Endlage erreicht, in welcher die Stützflächen 38, 42, 50 der Teile aufeinanderliegen und die Arbeitsfläche des Hubtisches 30 die vorgeschriebene Höhe hat. Die Toleranzen sind so gelegt, daß in der Stellung nach Figur 4 die Auflage mit Sicherheit über die Stützflächen erfolgt und die Hubrollen 44, 46 vom Stütz- bzw. Arbeitsdruck entlastet sind. Das bedingt, daß über einen kurzen Resthub hinweg die Teile bereits an den Stützflächen aufeinander liegen und gleitende Reibung zwischen Schieber 32 einerseits und Sockel 24 und Hubtisch 30 andererseits zu überwinden ist. Beim Wiederaufsetzen des Werkstückträgers 16 auf die Fördergurte 12, 14 laufen die Vorgänge in umgekehrter Reihenfolge ab.

Am Hubtisch 30 werden zweckmäßig noch Mittel zum Zentrieren und Fixieren der Werkstücke bzw. Werkstückträger vorgesehen, die jedoch nicht zur Erfindung gehören und daher in der Zeichnung nicht dargestellt sind.

**Patentansprüche**

1. Vorrichtung zum Abheben von Werkstücken bzw. Werkstückträgern von einer Förderbahn und zum Abstützen gegen Arbeitsdruck, mit einem Sockel (24), einem Hubtisch (30) und einem dazwischen angeordneten Schieber (32), der mit einem motorischen Stellantrieb (34) verbunden ist und bei seiner Bewegung von einer ersten in eine zweite Endstellung über Hubflächen (56, 58) den Hubtisch (30) anhebt, wonach Stützflächen (38, 42, 50) an Hubtisch (30), Schieber (32) und Sockel (24) aufeinanderliegen und den Arbeitsdruck auf den Sockel (24) übertragen, dadurch gekennzeichnet, daß die mit den Hubflächen (56, 58) zusammenarbeitenden Gegenflächen (60, 62) an drehbar gelagerten Hubrollen (44, 46) gebildet und die Stützflächen (38, 42, 50) versetzt zu den Hub- und Gegenflächen (56, 58, 60, 62) angeordnet sind, und daß die Hubflächen (56, 58) so gestaltet sind, daß bei der Bewegung des Schiebers (32) in die zweite Endstellung der Hubtisch (30) zunächst über seine Arbeitsstellung hinaus angehoben wird und sich danach auf die inzwischen unter seine eigenen Stützflächen (42) gelangten Stützflächen (50) des Schiebers (32) abzusenken vermag.

2. Vorrichtung nach Anspruch 1, dadurch gekennzeichnet, daß die Hubflächen (56, 58) am Umfang von Zylinderkörpern (52) gebildet sind, die vorzugsweise fest mit dem sie tragenden Teil (32) verbunden sind.

3. Vorrichtung nach Anspruch 2, dadurch gekennzeichnet, daß jedem Zylinderkörper (52) ein Vorhubkörper (54) kleineren Außendurchmessers vorgelagert ist.

4. Vorrichtung nach Anspruch 3, dadurch gekennzeichnet, daß der Vorhubkörper (54) ein feststehender Bolzen ist, der mit einer dem Zylinderkörper (52) zugekehrten und vorzugsweise an diesem anliegenden angefasten Fläche versehen ist.

5. Vorrichtung nach einem der vorhergehenden Ansprüche, dadurch gekennzeichnet, daß der Schieber (32) mit dem Hubtisch (30) zugekehrten Hubflächen (58) und der Hubtisch (30) mit den die Gegenflächen (62) bildenden Hubrollen (46) versehen ist.

6. Vorrichtung nach Anspruch 5, dadurch gekennzeichnet, daß der Schieber (32) auch mit dem Sockel (24) zugekehrten Hubflächen (56) und auch der Sockel (24) mit Gegenflächen (60) bildenden Hubrollen (44) versehen ist.

7. Vorrichtung nach Anspruch 6, dadurch gekennzeichnet, daß die dem Hubtisch (30) zugekehrten Hubflächen (58) und die dem Sockel (24) zugekehrten Hubflächen (56) am Schieber (32) an gemeinsamen Zylindernkörpern (52) und Vorhubkörpern (54) gebildet sind.

**Claims**

1. Device for lifting workpieces and workpiece supports from a conveyor track and for supporting them against working pressure, having a pedestal (24), a lifting table (30) and a slide (32) which is arranged therebetween and is connected to a motor-operated positioning drive (34) and, during its movement from a first into a second end position, lifts the lifting table (30) via lifting surfaces (56, 58), after which supporting surfaces (38, 42, 50) on the lifting table (30), slide (32) and pedestal (24) rest on one another and transmit the working pressure to the pedestal (24), characterized in that the mating surfaces (60, 62) which cooperate with the lifting surfaces (56, 58) are formed on rotatably mounted lifting rolls (44, 46), and the supporting surfaces (38, 42, 50) are arranged offset with respect to the lifting and mating surfaces (56, 58, 60, 62), and in that the lifting surfaces (56, 58) are designed in such a way that, during the movement of the slide (32) into the second end position, the lifting table (30) is first of all lifted beyond its working position and can then sink onto the supporting surfaces (50) of the slide (32), which have in the mean time reached position under its own supporting surfaces (42).

2. Device according to claim 1, characterized in that the lifting surfaces (56, 58) are formed on the periphery of cylindrical bodies (52) which are preferably rigidly connected to the part (32) carrying them.

3. Device according to Claim 2, characterized in that a preliminary-lift body (54) of smaller outside diameter is mounted in front of each cylindrical body (52).

4. Device according to claim 3, characterized in that the preliminary-lift body (54) is a fixed stud which is provided with a chamfered surface which faces the cylindrical body (52) and preferably rests against the latter.

5. Device according to one of the preceding claims, characterized in that the slide (32) is provided with lifting surfaces (58) which face the lifting table (30), and the lifting table (30) is provided with the lifting rolls (46) which form the mating surfaces (62).

6. Device according to Claim 5, characterized in that the slide (32) is also provided with lifting surfaces (56) which face the pedestal (24) and the pedestal (24) too is provided with lifting rolls (44) which form mating surfaces (60).

7. Device according to Claim 6, characterized in that the lifting surfaces (58) which face the lifting table (30) and the lifting surfaces (56) on the slide (32) which face the pedestal (24) are formed on common cylindrical bodies (52) and preliminary-lift bodies (54).

**Revendications**

1. Dispositif pour soulever des pièces ou des supports de pièces d'une voie de transport pour les appuyer contre une poussée de travail, dispositif comportant un socle (24), un plateau de levage (30) et un poussoir (32) placé entre ceux-ci et qui est relié à un moyen d'entraînement de réglage (34) motorisé et soulève le plateau de levage (30) au cours de son mouvement entre une première et une seconde position de fin de course, en agissant par l'intermédiaire de surfaces de levage (56, 58), puis les surfaces d'appui (38, 42, 50) du plateau de levage (30), du tiroir (32) et du socle (24) sont l'une sur l'autre et transmettent la pression de travail au socle (24), dispositif caractérisé en ce que les surfaces antagonistes (60, 62) qui coopèrent avec les surfaces de levage (56, 58) sont formées par des galets de levage (44, 46) montés à rotation et les surfaces d'appui (38, 42, 50) sont décalées par rapport aux surfaces de levage et aux surfaces antagonistes (56, 58, 60, 62) et en ce que les surfaces de levage (56, 58) sont telles que lorsque le poussoir (32) vient dans sa seconde position de fin de course le plateau de levage (30) est tout d'abord soulevé au-delà de sa position de travail puis peut de nouveau s'abaisser sur les surfaces d'appui (50) du poussoir (32) qui sont arrivées entre temps en-dessous de ces propres surfaces d'appui (42).

2. Dispositif selon la revendication 1, caractérisé en ce que les surfaces de levage (56, 58) sont formées par la périphérie d'organes cylindriques (52) qui sont de préférence reliés solidairement à la pièce (32) qui les porte.

3. Dispositif selon la revendication 2, caractérisé en ce que chaque organe cylindrique (52) est précédé par un organe de pré-levée (54) de plus petit diamètre extérieur.

4. Dispositif selon la revendication 3, caractérisé en ce que l'organe de pré-levée (54) est un goujon fixe qui présente une surface diminuée au niveau de son côté tourné vers le corps cylindrique (52), cette surface étant de préférence appliquée contre ce corps.

5. Dispositif selon l'une des revendications précédentes, caractérisé en ce que le poussoir (32) est muni de surfaces de levage (58) tournées vers le plateau de levage (30) et le plateau de levage (30) est muni de galets de levage (46) formant les surfaces antagonistes (62).

6. Dispositif selon la revendication 5, caractérisé en ce que le poussoir (32) est muni de surfaces de levage (56) tournées vers le socle (24) et coopérant avec les galets de levage (44) formant les surfaces antagonistes (60) du socle (24).

7. Dispositif selon la revendication 6, caractérisé en ce que les surfaces de levage (58) tournées vers le plateau de levage (30) et les surfaces de levage (56) tournées vers le socle (24) sont formées par des organes cylindriques (52) et des organes de pré-levage (54) communs sur le poussoir (32).

FIG. 1

20

22

12

16

10

14

18

EP 0 202 263 B1

FIG. 2

72

22

30

46

46

26
40

40

28

66

64

34

36

54

32

54

24

48

52

36 48

44

44

52

68

70

FIG. 3

FIG. 4